# EUROPÄISCHE PATENTSCHRIFT

(11) **EP 0 587 076 B1**
(45) Veröffentlichungstag und Bekanntmachung des Hinweises auf die Patenterteilung: **03.12.1997**
(21) Anmeldenummer: 93114195.6
(22) Anmeldetag: 04.09.1993
(51) Int. Cl.: B65B 51/14

(54) **Vorrichtungs-Schliesswerk, insbesondere für Folien-Schweisseinrichtungen**
Device-closing mechanism, especially for foil-welding equipment
Mécanisme de fermeture pour dispositif, notamment pour dispositifs de soudage de feuilles

(30) Priorität: 11.09.1992 DE 4230435
(43) Veröffentlichungstag der Anmeldung: 16.03.1994
(73) Patentinhaber: KALLFASS VERPACKUNGSMASCHINEN GmbH & Co., D-72622 Nürtingen-Zizishausen (DE)
(72) Erfinder: Kallfass, Karl-Heinz, D-72622 Nürtingen (DE)
(74) Vertreter: Patentanwälte Ruff, Beier, Schöndorf und Mütschele

(56) Entgegenhaltungen:
- EP-A- 0 139 589
- FR-A- 1 580 334
- US-A- 3 461 271

## Beschreibung

Die Erfindung betrifft ein Vorrichtungs-Schließwerk nach dem Oberbegriff des Patentanspruches 1. Es kann an Vorrichtungen, Geräten, Maschinen u.dgl. zur Überführung einer Baueinheit in eine oder mehrere genau vorbestimmte Lagepositionen verwendet werden, z.B. um ein Werkzeug oder einen anderen Vorrichtungsteil mit einer Gegeneinheit, einem Werkstück o.dgl. zusammenzuführen.

Das Bewegen der Schließeinheit o.dgl. in die genannte Position kann mit zahlreichen Problemen verbunden sein, nämlich z.B. mit Verletzungsgefahren durch die Schließeinheit, mit Steuerungsproblemen hinsichtlich der Schließkraft oder der genauen Abschaltung des Schließantriebes u.dgl.. Zum Beispiel muß häufig zum Unfallschutz eine Lichtschranke oder ein ähnlicher Sensor vorgesehen sein, um den Schließantrieb sofort dann abzuschalten und/oder auf Rücklauf umzusteuern, wenn Fremdkörper in den Schließspalt bzw. den Bewegungsweg der Schließeinheit gelangt sind. Schwierig zu steuern ist es auch, wenn die Zustell- bzw. die Schließeinheit zunächst mit höherer Geschwindigkeit in einem Eilgang zugestellt und dann auf dem letzten Teil des Bewegungsweges demgegenüber verlangsamt annähernd bis in die vorbestimmte Position überführt werden soll, gegebenenfalls mit zunehmender Schließkraft gegen Ende des zugehörigen Bewegungsweges.

Bei Folien-Schweißeinrichtungen und ähnlichen Füge- bzw. Bearbeitungsvorrichtungen ist häufig ein sehr einfacher, gewichtsmäßig leichter Aufbau erwünscht, weshalb komplizierte Steuerungen, insbesondere mechanische Steuerungen nicht zweckmäßig sind. Auch sollen insbesondere die bewegten Massen möglichst gering gehalten werden können.

Der EP-A-0 139 589 ist ein Schließ-Antrieb zu entnehmen, welcher die Schließeinheit mit einer motorbetriebenen Antriebskurve so schließt, daß das Schließ-Antriebsmoment im wesentlichen konstant ist. Durch ein Gelenk in einem Tragarm liegt die Schließeinheit in ihrer Endstellung nur unter ihrem Eigengewicht auf.

Der Erfindung liegt die Aufgabe zugrunde, ein Schließwerk der genannten Art zu schaffen, bei dem Nachteile bekannter Ausbildungen vermieden sind und das bei sehr einfachem Aufbau eine hohe Sicherheit der Funktion, gegen Unfälle, gegen Beschädigungen o. dgl. gewährleistet.

Erfindungsgemäß sind die Merkmale des Patentanspruches 1 vorgesehen. Das Antriebsmoment kann zur Überführung der Schließeinheit in eine oder mehrere der genannten Positionen so aufhebbar sein, daß die Schließeinheit auf einem an die genannte Position anschließenden und/oder mit Abstand benachbart zu dieser liegenden Teilweg durch eine Gegenkraft stillgesetzt oder wenigstens wesentlich verzögert werden kann, die verhältnismäßig gering ist bzw. einem Gegenmoment entspricht, das kleiner als das maximal auftretende Antriebsmoment ist. Das nur auf einem Teilweg formschlüssig bzw. schlupffrei auf die Schließeinheit übertragene Antriebsmoment kann am Ende dieses Teilweges auf eine kraftschlüssige Antriebsverbindung umgeschaltet werden, die bei Auftreten einer Gegenkraft nach Art einer Rutschkupplung selbsttägig als Reaktion auf diese Gegenkraft getrennt wird.

Besonders vorteilhaft ist es jedoch, wenn als Antrieb für den zu sichernden Teilweg nur ein Schwungantrieb, ein Schwerkraftantrieb o. dgl. vorgesehen ist, da dann die Antriebsenergie allein durch die Gegenkraft und ohne weitere Steuerungsmittel gegen Null zurückgeführt werden kann und danach bis auf eventuelle Gravitationskräfte nicht mehr wirksam ist.

Anstatt eine gesonderte Schwung- oder Gewichtsmasse für den Antrieb vorzusehen, kann diese Masse teilweise oder vollständig auch unmittelbar durch die Schließeinheit selbst gebildet sein, so daß keinerlei Getriebeverbindung zwischen der Masse und der Schließeinheit erforderlich ist. Durch Schwerpunktverlagerung der Masse kann die wirksame Gewichts- bzw. Schwungkraft auch stufenlos oder abgestuft verändert und dadurch an die jeweiligen Erfordernisse angepaßt bzw. justiert werden. Eine solche Justierung ist auch durch Veränderungen der Zeitdauer bzw. des Antriebsweges eines schlupffreien motorischen Antriebes möglich. Zum Beispiel kann diese Antriebszeit in der Größenordnung von oder unter einer, einer halben oder einer viertel Sekunde, insbesondere bei 0,2 bis 0,35 Sekunden liegen.

Das Antriebsmoment kann des weiteren auch in oder entgegen der Antriebsrichtung durch eine lineare oder abgestufte Federkraft, Dämpfung o. dgl. beeinflußt sein, wodurch das auf die Schließeinheit selbst wirkende Antriebsmoment entsprechend den jeweiligen Erfordernissen in vielfältiger Weise variiert werden kann. Gegen Ende der Bewegung bzw. Schwungbewegung braucht die Schließeinheit nicht nochmals schlupffrei angetrieben werden, um sie bis in die genannte Position zu bringen. Die Bewegungscharakteristik kann so gewählt sein, daß die einmal gegebene Schwung- oder Gewichtskraft bis zur Überführung in die genannte Position ausreicht, in welcher die Schließeinheit dann zweckmäßig durch eine form- oder kraftschlüssige Sicherung festgesetzt werden kann, die ihrerseits jedoch keine Bewegung der gesamten Schließeinheit verursachen muß. Die Sicherung allerdings kann als Stoßdämpfung auf die Schließeinheit wirken, so daß diese selbst bei verhältnismäßig großer Schwungkraft auf sehr kurzem Weg stillgesetzt und entweder am Ende des Dämpfweges lagegesichert oder zuvor durch die Dämpfeinrichtung über den Dämpfweg zurückgeführt und dann in dieser Lage gesichert wird.

Statt für linear, drehend oder ähnlich bewegbare Schließeinheiten ist die erfindungsgemäße Ausbildung insbesondere für Schließeinheiten geeignet, die in einer Bogenbahn bewegbar, z.B. um eine im wesentlichen vorrichtungsfeste Achse schwenkbar gelagert sind. Der Arbeitsweg kann dabei im wesentlichen unter 360° etwa einem Bogenwinkel von jedem ganzzahligen Vielfachen von 10° entsprechen und insbesondere unter 90°, nämlich bei etwa 45° liegen. Die Bogenbahn ist vorteilhaft so gewählt, daß auch die Masse der Schließeinheit als Gewichtskraft bzw. Antriebsmoment wirksam ist und/oder die zur Rückstellung in die Ausgangslage erforderlichen Kräfte beeinflußt. Bei etwa horizontaler Schwenkachse und annähernd liegender Arbeitsposition nimmt das Antriebsmoment durch Gewichtskraft zur Arbeitsposition stetig zu, bzw. zur Ausgangsposition stetig ab, während die Schwungenergie nach Aufheben des schlupffreien Antriebes bei ungestörtem Normalbetrieb zur Schließposition stetig abnimmt bzw. zur Ausgangsstellung stetig zunimmt.

Die Schließeinheit kann so justiert sein, daß sie trotz wirksamer Rückstellfedern in der Arbeitslage oder in weiteren dazu mit geringem Abstand benachbarten Positionen allein durch ihre Gewichtskraft im wesentlichen indifferent lagegesichert. In der Ausgangsposition bzw. in weiteren, mit geringem Abstand dazu benachbarten Positionen kann die Schließeinheit dagegen nur durch die rückstellende Federkraft gesichert sein, ggf. ebenfalls im wesentlichen indifferent. Dadurch ist eine sehr einfache Handhabung der Schließeinheit möglich, die z.B. auch von Hand durch die Bedienungsperson in den beschriebenen Abläufen freilaufend bewegt bzw. festgesetzt werden kann.

Durch die erfindungsgemäße Ausbildung kann auf zusätzliche Sicherheitsvorkehrungen zum Unfallschutz vollständig verzichtet werden, gegenüber welchen die erfindungsgemäße Ausbildung eine wesentlich größere, insbesondere störungsunempfindliche Sicherheit gewährleistet. Als motorischer Schließantrieb ist statt eines pneumatischen Antriebes oder eines mechanischen Antriebes über ein Zugorgan, wie eine Kette, ein unmittelbarer Antrieb der Schließeinheit durch direkte Verbindung mit einer Antriebswelle möglich, wobei eine Motorwelle, eine Getriebewelle, eine Antriebskupplung, eine Feder, eine Dämpfeinrichtung und/oder ein Schaltglied etwa in der Achse der Bewegungsbahn der Schließeinheit liegen kann, so daß sich eine sehr kompakte Ausbildung ergibt. Die genannten oder ähnliche Bauteile können etwa achsgleich hintereinander und/oder koaxial im Bereich gemeinsamer Längsabschnitte vorgesehen sein.

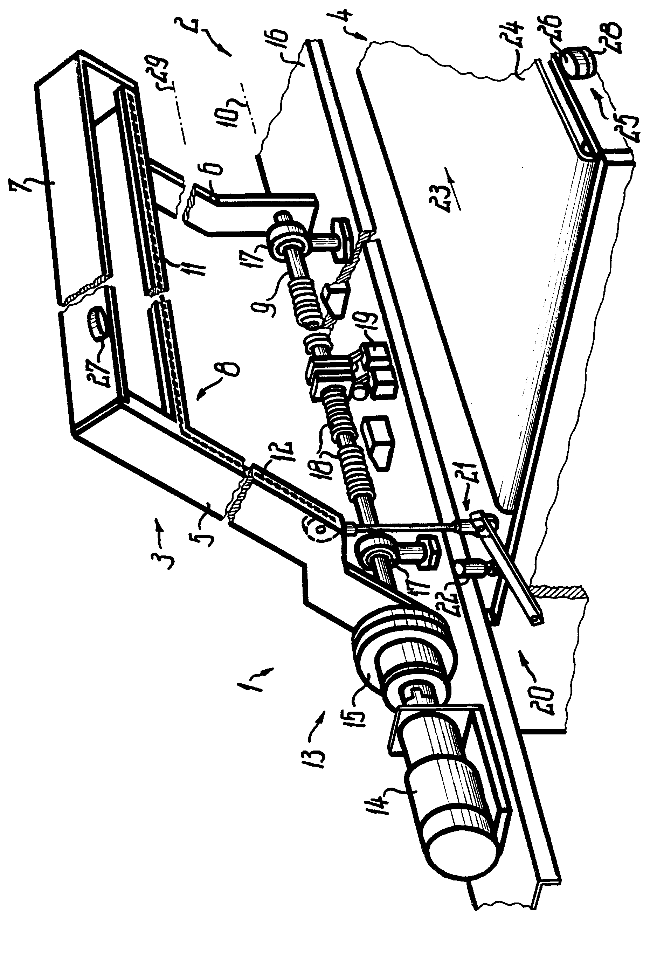

Diese und weitere Merkmale gehen außer aus den Ansprüchen auch aus der Beschreibung und der Zeichnung hervor, wobei die einzelnen Merkmale jeweils sich allein oder zu mehreren in Form von Unterkombinationen bei einer Ausführungsform der Erfindung und auf anderen Gebieten verwirklicht sein und vorteilhafte Ausführungen darstellen können. Ein Ausführungsbeispiel der Erfindung ist in der Zeichnung dargestellt und wird im folgenden näher erläutert. Die Zeichnung zeigt:
eine erfindungsgemäße Folien-Schweißeinrichtung mit Schließwerk in perspektivischer Darstellung.

Ein Schließwerk 1 ist hier für eine teilautomatische bzw. manuell zu bedienende Folien-Schweißeinrichtung vorgesehen, mit welcher Verpackungsgut in zeitlicher Aufeinanderfolge zwischen zwei übereinanderliegende Folienlagen eingelegt und dann die Folienlagen entlang mindestens einer oder zweier Verpackungskanten seitlich benachbart zum Verpackungsgut miteinander durch Schweißen verbunden werden sollen. Die Folienlagen sind als sogenannter Halbschlauch einteilig miteinander über einen zur Transportrichtung etwa parallelen Falz miteinander verbunden und werden von einem nicht näher dargestellten Rollenspeicher liegend auf einen Arbeitstisch abgewickelt, auf dem das Verpackungsgut zwischengelegt und auch die Trennschweißung durchgeführt werden kann. Eine Schweißnaht liegt dann auf der vom Falz abgekehrten Seite des Verpackungsgutes und eine Schweißnaht quer zur Förderrichtung benachbart zum hinteren Ende des Fördergutes, wobei die beiden Folienlagen beim vorangehenden Trennschweißvorgang in Förderrichtung vor dem Verpackungsgut durch das querliegende Schweißwerkzeug bereits miteinander verbunden worden sind, so daß eine über den Umfang vollständig geschlossene Verpackung entsteht.

Bei einer solchen Schweißeinrichtung 2 ist die Schließeinheit 3 des Schließwerkes 1 durch einen Schweißrahmen gebildet, während die mit der Schließeinheit 3 ein schließ- und öffenbares bzw. in seiner Öffnungsweite veränderbares Maul bildende Gegeneinheit 4 der Arbeits- bzw. ein Transporttisch ist. Dessen Auflageebene ist etwa horizontal vorgesehen und die Schließeinheit 3 liegt in jeder möglichen Arbeitslage oberhalb der Gegeneinheit 4, welche quer zu ihrer Auflageebene im wesentlichen vorrichtungsfest vorgesehen ist.

Der Schweißrahmen 3 weist zwei in Förderrichtung im Abstand sowie etwa parallel zueinander liegende, frei ausragende Rahmenschenkel 5, 6 auf, die im Bereich ihrer Enden über eine Querzarge 7 im wesentlichen starr miteinander verbunden sind. Mit Abstand von dieser Querzarge 7 trägt der Schweißrahmen 3 ein Trenn-Schweißwerkzeug 8, das im wesentlichen zwischen der Querzarge 7 und einer zu dieser etwa parallelen Welle 9 vorgesehen ist, die etwa parallel zur Förderrichtung, zum Transporttisch 4 und/oder etwa horizontal vorgesehen ist. Die Welle 9 verbindet die Rahmenschenkel 5, 6 in Nähe derer von der Querzarge 7 entfernten Enden formsteif miteinander und definiert die Arbeits-Achse 10 des Schließwerkes 1, um welche der Schweißrahmen 3 einschließlich der Welle 9 schwenkbar ist.

Das annähernd rechtwinklig winkelförmige Schweißwerkzeug 8 weist einen den Rahmenschenkel 5,6 formsteif verbindenden und zur Förderrichtung, zum Transporttisch 4 bzw. zur Querzarge 7 etwa parallelen Abschnitt auf, der mit geringem Abstand von der Querzarge 7 liegt. Ein rechtwinklig dazu liegender Abschnitt 12 ist an der dem Transporttisch zugekehrten Kante des in Förderrichtung ersten Rahmenschenkels 5 vorgesehen, der wie der andere Rahmenschenkel 6 flache bzw. rechteckige und quer zur Achse 10 liegende Querschnitte hat. Bei geschlossenem Schweißrahmen 3 reicht der Abschnitt 12 im wesentlichen über die Breite des Transporttisches 4, während der Abschnitt 11 zwischen den Seitenbegrenzungen des Transporttisches 4 näher benachbart zu der von der Achse 10 entfernten Seitenbegrenzung liegt. Die Achse 10 kann etwa in Höhe der Auflageebene des Transporttisches oder geringfügig darüber so liegen, daß bei geschlossenem Schweißrahmen 3 die Schweißzone des gesamten Schweißwerkzeuges 8 etwa in der Auflageebene liegt. Das Schweißwerkzeug weist einen über beide Abschnitte 11, 12 ununterbrochen durchgehenden Schweißdraht auf, der durch elektrische Leistungsbeaufschlagung so erhitzbar ist, daß er bei einem Schweißvorgang gleichzeitig die beiden Folienlagen entlang der genannten Verpackungskanten streifenförmig miteinander verbindet und zwischen den Seitenbegrenzungen der streifenförmigen Schweißnaht durchtrennt, so daß die beiden Lagen jeweils beiderseits jeder Trennstelle durch eine Schweißnaht miteinander verbunden sind.

Zur Bewegung des Schweißrahmens 3 aus seiner in der Zeichnung dargestellten Ausgangslage von etwa 45° Neigung zur genannten Schließstellung ist ein Antrieb 13 vorgesehen, der kombiniert als motorischer Antrieb, als Schwungantrieb und als Schwerkraftantrieb wirkt. Ein elektrischer oder ähnlicher Motor 14 ist unmittelbar benachbart zur Außenseite des Rahmenschenkels 5 in der Achse 10 angeordnet und über eine zwischen ihm und dem Rahmenschenkel 5 liegende Kupplung 15 mit dem Schweißrahmen 3 bzw. der Welle 9 antriebsverbindbar sowie vollständig von der Welle 9 trennbar. Dadurch kann der Motor 14 ständig, nämlich auch bei getrennter Kupplung 15 laufen, anstatt den schlupffrei angetriebenen Teil des Bewegungsweges dadurch zu beenden, daß die Energiebeaufschlagung des Motors abgeschaltet wird und danach der Rotor des Motors lediglich als Teil der Schwungsmasse mitläuft. Der Motor 14 kann z. B. seitlich benachbart zum nicht dargestellten Speicher für die Folienbahn vorgesehen sein. Die mechanische Kupplung 15 ist z. B. als elektromagnetische Schaltkupplung ausgebildet, welche im ausgerückten Zustand die Antriebsverbindung im wesentlichen widerstands- bzw. reibungsfrei trennt.

Der Motor 14 ist an bzw. auf einem Vorrichtungssockel 16 befestigt und zwar auf einer Tragplatine, auf welcher auch der Schweißrahmen 3 gelagert ist. Für dessen Lagerung sind ausschließlich zwischen den Rahmenschenkeln 5, 6 liegende und auf der Tragplatine befestigte nahezu reibungsfreie Stand-Lager 17 vorgesehen, die jeweils nahe benachbart zu den Innenseiten der Rahmenschenkel 5, 6 liegen und Wälzlager sind. Zwischen den Rahmenschenkeln 5, 6 bzw. den Lagern 17 ist die Welle 9 von im wesentlichen vier aufgesteckten Federn 18 umgeben, die mit Abständen axial hintereinander liegen, gleich ausgebildet sein können und als Schraubenfedern ausgebildet sind, die als Torsionsfedern wirken. Ein Federende ist jeweils formschlüssig gegenüber der Welle 9 festgelegt, während das andere Federende an einem Widerlager des Sockels 16 formschlüssig abgestützt ist.

Die jeweilige Position des Schweißrahmens 3 wird z. B. durch zwei Schalter 19 überwacht, welche von Kurven betätigt sind, die auf der Welle 9 drehfest angeordnet sind und etwa in der Mitte zwischen den Rahmenschenkeln 5, 6, den Lagern 17 bzw. den Federn 18 liegen können. Diese Schalter 19 gehören zweckmäßig zu einer Steuereinrichtung 20, die insbesondere dafür vorgesehen sein kann, den schlupffreien motorischen Antrieb des Schweißrahmens 3 in Abhängigkeit von dessen Position bzw. Winkellage und/oder zeitabhängig durch Ausrücken der Kupplung 15 schlagartig abzubrechen.

Ein Steuergestänge 21 weist einen mit Abstand von der Achse 10 bzw. zwischen dieser und dem Abschnitt 11 des Schweißwerkzeuges 8 an der Innenseite des Rahmenschenkels 5 angelenkten und quer bzw. annähernd rechtwinklig zur Ebene des Transporttisches 4 vorgesehenen Lenker auf. Ein weiterer Lenker ist etwa in Höhe der Tischebene oder geringfügig darunter am Sockel 16 schwenkbar gelagert, wobei die beiden Lenker mit ihren von den genannten Lagerstellen entfernten Enden gelenkig miteinander verbunden sind. Der am Sockel 16 gelagerte Lenker läuft gegen Ende der Rückstellbewegung auf einen mechanischen Dämpfer 22 auf, welcher einen kurzen Dämpfweg bestimmt und auch als Anschlag für die Ausgangsstellung vorgesehen sein kann.

Der Transporttisch 4 ist im wesentlichen durch das obere Trum eines umlaufend antreibbaren Förderbandes 24 gebildet, mit welchem nach jedem Schweißvorgang das verpackte Verpackungsgut schrittweise um eine Verpackungsgut-Länage in Förderrichtung 23 weitertransportiert werden kann, so daß dann ein neuer Folienabschnitt im Arbeitsbereich des Schweißrahmens 3 bzw. des Schweißwerkzeuges 8 liegt. Zur Lagesicherung des Schweißrahmens 3 in der Schließlage ist eine Sicherung 25 vorgesehen, die im Abstand von der Achse 10 bzw. der Welle 9 im Bereich des freien Kragarmendes des Schweißrahmens 3, nämlich im wesentlichen an der Querzarge 7 angreift. Die Sicherung kann auf der von der Achse 10 abgekehrten Seite des Transporttisches 4 einen oder mehrere am Sockel 16 befestigte Haltemagnete 26 aufweisen, die zweckmäßig als Elektromagnete ausgebildet sind. Jedem Haltemagnet 26 ist am Schweißrahmen 3 ein Gegenstück 27 in Form eines Ferromagneten zugeordnet, der zweckmäßig an der Außenseite der Querzarge 7 befestigt ist. In Schließlage des Schweißrahmens 3 berührt das Gegenstück 27 den Haltemagnet 26, so daß bei erregtem Haltemagnet 26 der Schweißrahmen 3 gesichert wird.

Dem Gegenstück bzw. den Haltemagneten kann eine Dämpfung 28 zugeordnet sein, die dem gedämpften Bauteil einen kurzen Dämpfweg erlaubt und diesen Bauteil dann selbsttätig wieder zur Ausgangslage zurückstellt. Statt der Magnetsicherung kann auch eine formschlüssige Verriegelung vorgesehen sein, deren Dämpfweg dann ggf. zum Antrieb bewegbarer Riegelglieder dienen kann, so daß die Verriegelung ebenfalls nur durch die Schwungmasse angetrieben bzw. eingerückt wird.

Zum Betrieb der Schweißeinrichtung 2 bzw. des Schließwerkes 1 wird bei laufendem Motor 14 die Kupplung 15 eine sehr kurze Zeit von etwa 0,2 bis 0,35 Sekunden eingerückt, nämlich so, daß die schlupffreie Antriebesverbindung nur über einen Drehwinkel von etwa 5° bis 10° gegeben ist. Am Ende dieses kurzen Bewegungsbeweges wird die Kupplung 15 z. B. weg- bzw. winkelabhängig wieder ausgerückt, so daß der Schweißrahmen 3 vollständig antriebslos ist. Über die gesamte Drehbewegung werden die bereits in der Ausgangsstellung unter rückstellender Vorspannung stehenden Federn 18 zunehmend gespannt. Die zur Achse 10 parallele Schwereachse 29 des Schweißrahmens 3, die näher bei der Querzarge 7 bzw. dem freien Ende des Schweißrahmens 3 als bei der Achse 10 liegt, gelangt bei der Schwenkbewegung in zunehmend größeren Horizontalabstand zur Achse 10, so daß die Wirkung der Schwerkraft entsprechend zunimmt.

Die Spannung der Federn 18 und die genannte, entgegengesetzt gerichtete Wirkung der Schwerkraft können so aufeinander abgestellt bzw. justiert sein, daß sie einander nahezu ausgleichen, so daß nach dem Ausrücken der Kupplung 15 für die weitere Bewegung des Schweißrahmens 3 vor allem dessen Schwungsmasse maßgebend ist. In der Schließlage kann die Gewichtskraft die Federkraft übersteigen, so daß der Schweißrahmen 3 in dieser Schließlage monostabil durch Gewichtskraft gehalten ist. Das gleiche kann auch für eine geringfügig geöffnete Lage gelten und erst nach Erreichen einer noch weiter geöffneten Lage sowie in der Ausgangstellung überwiegt die Rückstellkraft der Federn 18, durch die der Schweißrahmen 3 dann selbsttätig zur Ausgangsstellung überführt und in der anschlagbegrenzten Ausgangsstellung monostabil gehalten wird.

Die genannte Schwungkraft reicht aus, um den Schweißrahmen 3 über den weitaus größten Teil seines gesamten Bewegungsweges antriebslos bis in die Schließ- bzw. Sicherungslage zu überführen, in welcher er auch durch die Sicherung 25 lagegesichert ist. In dieser Schließlage wird das Schweißwerkzeug 8 in der beschriebenen Weise wirksam.

Wirkt nach dem Ausrücken der Kupplung 15 auf den Schweißrahmen 3 ein zu dessen Bewegung entgegengesetzt gerichteter Widerstand, so wird von diesem die relativ geringe Schwung- und Gewichtsenergie sofort absorbiert und der Schweißrahmen 3 stillgesetzt, ohne daß es zu Verletzungen oder Beschädigungen kommen könnte. Die Steuereinrichtung 20 ist so ausgebildet, daß danach der Schweißrahmen 3 von Hand bis in die Schließlage und danach in die Öffnungslage überführt werden muß, um die Kupplung 15 wieder einzurücken bzw. die Antriebsverbindung wieder herzustellen. Die Zuhaltung bzw. die Sicherung 25 kann über einen Endschalter betätig werden, z.B. einen der Schalter 19. Statt eines Elektromotors kann als Antrieb auch ein Luftmotor, eine pneumatische oder hydraulische Zylindereinheit oder dgl. vorgesehen sein. Jeder der beschriebenen Bauteile bzw. jede der beschriebenen Anordnungen kann nur ein einziges Mal oder in einer Mehrzahl vorgesehen sein, z.B. um hinter-, neben- und/oder übereinander mehrere Schließwerke zur gleichzeitigen und/oder aufeinanderfolgenden Herstellung geschlossener Verpackungen oder dgl. vorzusehen.

## Patentansprüche

1. Vorrichtungs-Schließwerk, insbesondere für Werkstück-Bearbeitungsvorrichtungen, wie Folien-Schweißeinrichtungen (2), mit wenigstens einer an einem Vorrichtungs-Sockel (16) durch mindestens eine Lagerung (17) zwischen wenigstens einer Schließstellung und mindestens einer Ausgangsstellung bewegbaren Schließeinheit (3) und mit wenigstens einem Schließ-Antrieb (13) zur Bewegung der Schließeinheit (3) über einen Schließweg mit einem Schließ-Antriebsmoment, dadurch gekennzeichnet, daß die Antriebsverbindung zwischen dem Schließantrieb (13) und der Schließeinheit (3) nach einem Teilabschnitt des Schließweges aufhebbar ist.

2. Schließwerk nach Anspruch 1, dadurch gekennzeichnet, daß die Schließeinheit mit einer entgegen der Schließbewegung gerichteten Federkraft belastet ist, die vorzugsweise mit einem Schließweg zunimmt.

3. Schließwerk nach Anspruch 2, dadurch gekennzeichnet, daß die Federkraft annähernd auf einen indifferenten Gleichgewichtszustand der Schließeinheit (3) bzw. eine Federkraft als Rückstellkraft bzw. Haltekraft für die Schließeinheit (3) justiert ist.

4. Schließwerk nach Anspruch 1 oder 2, dadurch gekennzeichnet, daß der Schließeinheit (3) wenigstens über einen Teilabschnitt eines Schließweges, insbesondere einem an eine Schließstellung anschließenden Wegabschnitt, mindestens eine Dämpfeinrichtung (28) zugeordnet ist.

5. Schließwerk nach einem der vorhergehenden Ansprüche, dadurch gekennzeichnet, daß der Schließantrieb (13) als elektromechanischer Antrieb ausgebildet ist und mindestens eine Antriebswelle aufweist, die über eine Schaltkupplung (15) mit der Schließeinheit (3) antriebsverbunden ist.

6. Schließwerk nach einem der vorhergehenden Ansprüche, dadurch gekennzeichnet, daß der Schließweg eine Bogenbahn enthält, die in einer Höhenrichtung verläuft, wobei vorzugsweise die Schließeinheit (3) als Kragarm im wesentlichen frei von einer Lagerung (17) und in einer Schließlage annähernd horizontal ausragt und/oder daß mindestens eine Schließeinheit (3) um eine gegenüber dem Sockel (16) im wesentlichen feststehende, zu einer Werkstück-Förderrichtung (23) etwa parallele Schließ-Achse (10) schwenkbar gelagert ist und vorzugsweise von oben nach unten zur Schließlage bewegbar ist.

7. Schließwerk nach einem der vorhergehenden Ansprüche, dadurch gekennzeichnet, daß die Schließeinheit (3) über etwa ein Zehntel bis ein Viertel, vorzugsweise ein Achtel bis ein Fünftel ihres Schließweges motorisch, zeit- und/oder wegabhängig mit einem erhöhten Schließ-Antriebsmoment angetrieben ist, daß die in einer Bogenbahn bewegbare Schließeinheit (3) auf einem Bogenweg von etwa 5° bis 10° mit einem erhöhten Schließ-Antriebsmoment angetrieben ist.

8. Schließwerk nach einem der vorhergehenden Ansprüche, dadurch gekennzeichnet, daß wenigstens eine von Baueinheiten, die durch mindestens einen motorischen Antrieb (14), wenigstens eine Antriebsmoment-Steuereinrichtung (15) und mindestens eine Feder (18) gebildet sind, annähernd in einer Funktions-Achse (10) der Schließeinheit (3) angeordnet ist, wobei ein motorischer Antrieb und/oder eine Steuereinrichtung (15) seitlich benachbart zu einer Schließeinheit (3) angeordnet ist und eine Feder (18) zwischen die Seitenbegrenzungen einer Schließeinheit (3), ggf. auf einer Welle (9), angeordnet ist.

9. Schließwerk nach einem der vorhergehenden Ansprüche, dadurch gekennzeichnet, daß für die Schließeinheit (3) eine kraft- und/oder formschlüssige Schließ-Sicherung (25) vorgesehen ist, die mindestens einen Sicherungsmagneten (26) und/oder wenigstens einen Schließriegel aufweist.

10. Schließwerk nach einem der vorhergehenden Ansprüche, dadurch gekennzeichnet, daß mindestens eine Schließeinheit (3) zwei beiderseits seitlich und im Abstand voneinander liegende Tragarme (5, 6) aufweist, daß insbesondere im Bereich des Endes mindestens eines Tragarmes (5, 6) und diese verbindend mindestens ein Trenn-Schweißwerkzeug (8) vorgesehen ist, und daß vorzugsweise als Gegeneinheit (4) der Schließeinheit (3) gegenüberliegend ein Werkstück-Transporteur (24) vorgesehen ist.

## Claims

1. Device closing mechanism, particularly for workpiece processing devices, such as film or foil welding devices (2), with at least one closing unit (3) on a device base (16) movable by at least one bearing (17) between at least one closing position and at least one starting position and with at least one closing drive (13) for moving the closing unit (3) over a closing path with a closing driving torque, characterized in that the drive connection between the closing drive (13) and the closing unit (3) can be eliminated after a portion of the closing path.

2. Closing mechanism according to claim 1, characterized in that the closing unit is loaded with a spring tension directed counter to the closing movement and which preferably increases with a closing path.

3. Closing mechanism according to claim 2, characterized in that the spring tension is adjusted approximately to a neutral equilibrium state of the closing unit (3) or a spring tension as the restoring or holding force for the closing unit (3).

4. Closing mechanism according to claim 1 or 2, characterized in that at least one damping means (28) is associated with the closing unit (3), at least over a portion of a closing path, particularly a portion following onto a closed position.

5. Closing mechanism according to one of the preceding claims, characterized in that the closing drive (13) is constructed as an electromagnetic drive and has at least one driving shaft drive-connected by means of a clutch (15) to the closing unit (3).

6. Closing mechanism according to one of the preceding claims, characterized in that the closing path contains a trajectory running in a height direction and preferably the closing unit (3) as a cantilever substantially free from a bearing (17) and in a closed position projects in an approximately horizontal manner and/or that at least one closing unit (3) is pivotably mounted about a closing axis (10) approximately parallel to a workpiece conveying direction (23) and substantially fixed with respect to the base (16) and is preferably movable from top to bottom to the closed position.

7. Closing mechanism according to one of the preceding claims, characterized in that the closing unit (3) is driven in motor, time and/or path-dependent manner with an increased closing driving torque over approximately 1/10 to 1/4, preferably 1/8 to 1/5 of its closing path and that the closing unit (3) movable in a trajectory is driven on a curved path of approximately 5 to 10° with an increased closing driving torque.

8. Closing mechanism according to one of the preceding claims, characterized in that at least one of the subassemblies formed by at least one motor drive (14), at least one driving torque control device (15) and at least one spring (18), is located approximately in a function axis (10) of the closing unit (3), a motor drive and/or control device (15) being positioned laterally adjacent to a closing unit (3) and a spring (18) is located between the lateral boundaries of a closing unit (3), optionally on a shaft (9).

9. Closing mechanism according to one of the preceding claims, characterized in that for a closing unit (3) is provided a positive and/or non-positive closing security means (25), which has at least one securing magnet (26) and/or at least one closing bolt.

10. Closing mechanism according to one of the preceding claims, characterized in that at least one closing unit (3) has two bilateral, spaced support arms (5, 6), that in particular in the vicinity of the end of at least one support arm (5, 6) and connecting the same there is at least one hot-wire welding tool (8) and that preferably a workpiece conveyor (24) is provided as a counterunit (4) facing the closing unit (3).

## Revendications

1. Mécanisme de fermeture de dispositif, en particulier pour dispositifs de traitement de pièces, tels que des appareils à souder des feuilles de plastique (2), comprenant au moins une unité de fermeture (3) déplaçable sur un socle de dispositif (16) par au moins une monture (17) entre au moins une position fermée et au moins une position initiale, ainsi qu'au moins un entraînement (13) pour la fermeture, servant à mouvoir l'unité de fermeture (3) sur un trajet de fermeture par un couple d'entraînement de fermeture, caractérisé en ce que la liaison d'entraînement entre l'entraînement de fermeture (13) et l'unité de fermeture (3) est susceptible d'être supprimée après une partie du trajet de fermeture.

2. Mécanisme de fermeture selon la revendication 1, caractérisé en ce que l'unité de fermeture est chargée par une force élastique dirigée en sens contraire au mouvement de fermeture et augmentant de préférence conjointement avec un trajet de fermeture.

3. Mécanisme de fermeture selon la revendication 2, caractérisé en ce que la force élastique est ajustée approximativement à un état d'équilibre indifférent de l'unité de fermeture (3) ou à un force de ressort agissant comme force de rappel ou comme force de maintien de l'unité de fermeture (3).

4. Mécanisme de fermeture selon la revendication 1 ou 2, caractérisé en ce qu'au moins un dispositif d'amortissement (28) est coordonné à l'unité de fermeture (3) sur au moins une partie d'un trajet de fermeture, en particulier sur une partie de trajet faisant suite à une position fermée.

5. Mécanisme de fermeture selon une des revendications précédentes, caractérisé en ce que l'entraînement de fermeture (13) est réalisé comme un entraînement électromécanique et comporte au moins un axe d'entraînement relié, pour l'entraînement, à l'unité de fermeture (3) par l'intermédiaire d'un accouplement commandé (15).

6. Mécanisme de fermeture selon une des revendications précédentes, caractérisé en ce que le trajet de fermeture contient une trajectoire courbe qui s'étend dans une direction en hauteur, l'unité de fermeture (3) dépassant de préférence à la façon d'un bras en porte-à-faux et de manière essentiellement libre d'une monture (17), avec une orientation approximativement horizontale dans une position fermée, et/ou qu'au moins une unité de fermeture (3) est montée pivotante autour d'un axe de fermeture (10) qui est essentiellement fixe par rapport au socle (16) et à peu près parallèle à une direction de transport de pièces (23), l'unité de fermeture (3) étant de préférence déplaçable de haut en bas vers la position fermée.

7. Mécanisme de fermeture selon une des revendications précédentes, caractérisé en ce que l'unité de fermeture (3) est entraînée, au moyen d'un moteur, par un couple d'entraînement de fermeture qui est accru en fonction du temps et/ou du trajet, sur environ un dixième à un quart, de préférence un huitième à un cinquième de son trajet de fermeture, et que, en particulier, l'unité de fermeture (3) déplaçable suivant un trajet courbe, est mue par un couple d'entraînement de fermeture accru sur un trajet en arc d'environ 5° à 10°.

8. Mécanisme de fermeture selon une des revendications précédentes, caractérisé en ce que' l'un au moins de plusieurs sous-ensembles, formés par au moins un entraînement à moteur (14), au moins un dispositif de commande du couple d'entraînement (15) et au moins un ressort (18), est disposé approximativement sur un axe fonctionnel (10) de l'unité de fermeture (3), un entraînement à moteur et/ou un dispositif de commande (15) étant agencé latéralement à proximité d'une unité de fermeture (3), et un ressort (18) étant agencé entre les délimitations latérales d'une unité de fermeture (3), éventuellement sur un axe (9).

9. Mécanisme de fermeture selon une des revendications précédentes, caractérisé en ce qu'une sûreté de fermeture (25), agissant par une force et/ou mécaniquement, est prévue pour l'unité de fermeture (3), sûreté qui comporte au moins un aimant de sûreté (26) et/ou au moins un verrou de fermeture.

10. Mécanisme de fermeture selon une des revendications précédentes, caractérisé en ce qu'au moins une unité de fermeture (3) comporte deux bras porteurs (5, 6) situés latéralement sur les deux côtés et à distance l'un de l'autre, qu'au moins un outil de soudage-sectionnement (8) est prévu en particulier dans la zone de l'extrémité d'au moins un bras porteur (5, 6) et de manière à relier ces bras, et que, de préférence, un transporteur (24) de pièces est prévu comme unité antagoniste (4) en face de l'unité de fermeture (3).
